# FASCICULE DE BREVET EUROPEEN

(11) **EP 1 135 730 B1**
(45) Date de publication et mention de la délivrance du brevet: **28.05.2003**
(21) Numéro de dépôt: 99956124.4
(22) Date de dépôt: 23.11.1999
(51) Int. Cl.: G06F 12/14

(54) **DISPOSITIF ET PROCEDE DE PROTECTION CONTRE UN ACCES A UNE MEMOIRE ET MACHINE A AFFRANCHIR LES METTANT EN OEUVRE**
VORRICHTUNG UND VERFAHREN ZUM SCHUTZ GEGEN EINEN SPEICHERZUGRIFF UND ZUGEHÖRIGE FRANKIERMASCHINE
METHOD AND DEVICE FOR PROTECTION AGAINST ACCESS TO A MEMORY AND FRANKING MACHINE USING SAME

(30) Priorité: 24.11.1998 FR 9814774
(43) Date de publication de la demande: 26.09.2001
(73) Titulaire: SECAP, 92100 Boulogne-Billancourt (FR); Ascom Autelca AG, 3018 Bern-Bumpliz (CH)
(72) Inventeur: DERY, Jean-Marc, F-92600 Asnieres (FR); L'HOTE, Frédéric, F-75015 Paris (FR)
(74) Mandataire: Santarelli
(86) Numéro de dépôt international: FR9902882
(87) Numéro de publication internationale: WO00031645

(56) Documents cités:
- EP-A- 0 540 095
- EP-A- 0 735 488
- FR-A- 2 740 235
- "386 DX Programmer's Reference Manual" , 386 DX PROGRAMMER'S REFERENCE MANUAL, 1990, PAGE(S) A, III - XI, 4.01 6.03, 7.0 , INTEL CORPORATION XP002097260 page 7-1 -page 7-9 page 9-8

## Description

La présente invention se rapporte à un dispositif et à un procédé de protection contre un accès à une mémoire et à une machine à affranchir les mettant en oeuvre.

Elle s'applique en particulier aux machines à la détection de tout accès interdit, en écriture à des compteurs ascendants ou descendants d'une machine à affranchir, compteurs relatifs à des sommes d'argent. Elle s'applique aussi, en particulier, à la protection en lecture et en écriture d'une clé privée d'une méthode de cryptage ou d'authentification.

Dans une machine à affranchir, certains compteurs (dits "postaux") représentent des sommes d'argent. Dans l'état de la technique antérieure à la présente invention, aucune protection logicielle n'est prévue contre des accès interdits.

Le document EP-A-0 735 488 se rapporte à un appareil et un procédé de commande d'exécution de programmes multiples, qui empêchent un programme qui est en cours d'exécution d'accéder inutilement à un autre programme, mais qui ne permettent pas de détecter un accès à des données à protéger.

Le document FR-A- 2 740 235 décrit une technique de sécurisation du fonctionnement d'un système électronique à bord d'un véhicule automobile, face à des perturbations dans l'environnement du véhicule, permettant de valider ou non l'accès à une zone de stockage de données, mais n'apportant pas non plus de solution au problème de la détection des accès interdits.

Des solutions consistant à effectuer un verrouillage par une carte électronique, sont complexes et coûteuses.

La présente invention vise à remédier à ces inconvénients.

A cet effet, la présente invention vise à utiliser des ressources de certains types de processeurs pour protéger les données conservées dans certaines zones de mémoire protégées. Les processeurs en question sont des processeurs possédant un point d'arrêt matériel (connu sous le nom de "debug register" signifiant "registre pour la mise au point"). Ces points d'arrêt matériels sont, conformément à la présente invention, programmés de manière à contrôler les accès à une donnée protégée.

La mise en oeuvre d'un point d'arrêt provoque la génération d'une interruption à chaque fois qu'une adresse mémoire programmée est accédée.

Ainsi, selon un premier aspect, la présente invention vise un procédé de protection de données selon la revendication 1.

Grâce à ces dispositions, une interruption est générée à chaque fois qu'une donnée à protéger est accédée.

Des caractéristiques particulières de ce procédé sont exposées dans les revendications dépendantes.

Grâce à chacune de ces dispositions, la mise en oeuvre de la présente invention est particulièrement simple et efficace.

Selon un deuxième aspect, la présente invention vise un dispositif de protection de données selon la revendication 5.

L'invention vise, aussi, une machine à affranchir, caractérisée en ce qu'elle comporte un tel dispositif.

Ce dispositif et cette machine à affranchir présentant les mêmes avantages que le procédé de protection de données succinctement exposé ci-dessus, ceux-ci ne sont pas rappelés ici.

D'autres avantages, buts et caractéristiques ressortiront de la description qui va suivre, faite en regard des dessins annexés dans lesquels :
- la figure 1 représente, une machine à affranchir mettant en oeuvre le dispositif et le procédé de protection objet de la présente invention,
- la figure 2 représente, schématiquement, un circuit électronique incorporé dans la machine à affranchir illustrée en figure 1, et
- la figure 3 représente un organigramme de fonctionnement du dispositif illustré en figures 1 et 2.

La machine à affranchir 1 illustrée sur les dessins comporte un dispositif pour imprimer, sur un objet plat tel que la lettre 2, d'une part, une marque d'affranchissement et, éventuellement, une adresse de destination de l'enveloppe.

Pour imprimer la marque d'affranchissement sur l'emplacement normalisé prévu à cet effet, il faut faire passer la lettre 2 dans un couloir 5 que comporte la machine 1, ce couloir étant délimité par des éléments solidaires du bâti, respectivement un support de glissement 6 qui forme le plafond du couloir 5, une table 7 qui en forme le plancher et une rampe qui en forme une limite latérale, le couloir étant ouvert à l'opposé de cette rampe.

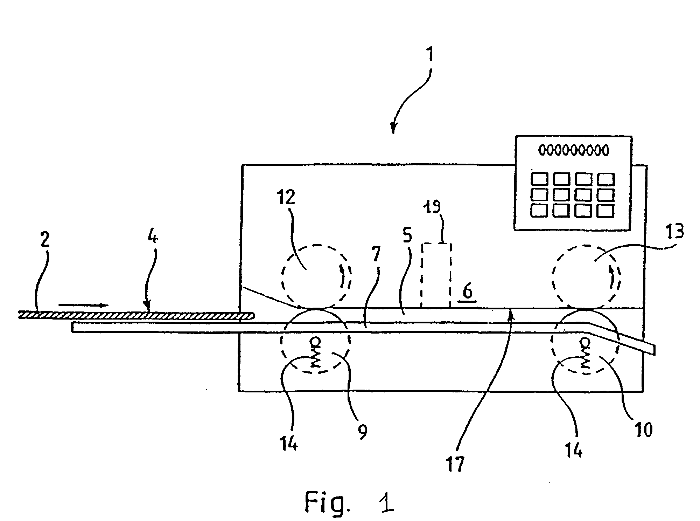

Pour faire passer la lettre 2 dans le couloir 5, on pose la lettre sur la partie de la table 7 qui est en saillie du côté prévu pour l'introduction (côté que l'on voit à gauche en figure 1) puis on fait rentrer la lettre dans le couloir 5, comme montré en figure 1, jusqu'à ce qu'elle soit entraînée par les moyens prévus à cet effet dans la machine 1, l'impression de la marque d'affranchissement s'effectuant automatiquement pendant que la lettre 2 est entraînée dans le couloir 5, la lettre affranchie étant expulsée de la machine à l'autre extrémité du couloir 5 (extrémité que l'on voit à droite en figure 1).

Pour entraîner la lettre 2, la machine 1 comporte deux galets 9 et 10 passant chacun au travers d'une ouverture de la table 7, et deux contre-galets 12 et 13, respectivement pour le galet 9 et pour le galet 10, passant au travers d'une ouverture du support 6.

Les galets 9 et 10 sont montés à rotation par rapport au bâti de la machine 1, par l'intermédiaire de moyens de suspension 14 montrés schématiquement sur la figure 1.

Les contre-galets 12 et 13 sont montés à rotation sur le bâti de la machine 1, sans être suspendus par rapport à celui-ci. Un moteur électrique non représenté sert à entraîner en rotation synchrone les contre-galets 12 et 13, par exemple par l'intermédiaire d'une courroie (non représentée) qui tourne autour de trois pignons portés respectivement par le moteur, par le contre-galet 12 et par le contre-galet 13.

Etant donné que les moyens de suspension 14 sollicitent les galets 9 et 10 vers le support 6, et donc vers les contre-galets 12 et 13, les galets 9 et 10 sont entraînés par friction sur les contre-galets 12 et 13, directement ou par l'intermédiaire d'un objet, tel que la lettre 2, en cours de passage dans la machine 1.

La lettre 2, lorsqu'elle est introduite dans le couloir 5 comme montré sur la figure 1, finit par rencontrer le galet 9 puis le contre-galet 12 qui l'entraîne dans le sens indiqué sur la figure 1 par la flèche horizontale orientée de gauche à droite. Simultanément, le galet 9 s'abaisse tandis que la lettre 2 s'introduit entre les galets 9 et 12 de sorte que la lettre 2 progresse dans la machine 1 avec sa face à imprimer 4 qui est plaquée et qui glisse contre la surface 17 du support de glissement 6.

Pour imprimer la marque d'affranchissement à l'emplacement normalisé qui lui correspond et/ou l'adresse de destination à l'emplacement normalisé qui lui correspond, la machine 1 comporte des moyens d'impression 19 montrés très schématiquement sur la figure 1.

Dune façon générale, les moyens d'impression 19 déposent la marque d'affranchissement pendant que la lettre 2 ou l'objet à affranchir circule dans la machine 1 avec sa face à imprimer qui est plaquée contre la surface 17 du support de glissement 6, les moyens 19 étant situés entre les contre-galets 12 et 13.

Dans l'exemple illustré, les moyens d'impression 19 sont montés directement sur le bâti de la machine, et sont donc fixes par rapport au support de glissement 6.

Afin que les moyens d'impression 19 soient commandés en synchronisme avec l'avancement de l'objet dans la machine, il est prévu un détecteur de présence de l'objet (non représenté) qui déclenche un processus d'impression se déroulant automatiquement.

Plus précisément, il existe un premier détecteur de présence qui commande la mise en route du moteur (non représenté) lorsqu'un objet commence à être introduit dans la machine 1, et un deuxième détecteur de présence (non représenté) qui déclenche le processus d'impression lorsque l'objet est parvenu à un emplacement prédéterminé.

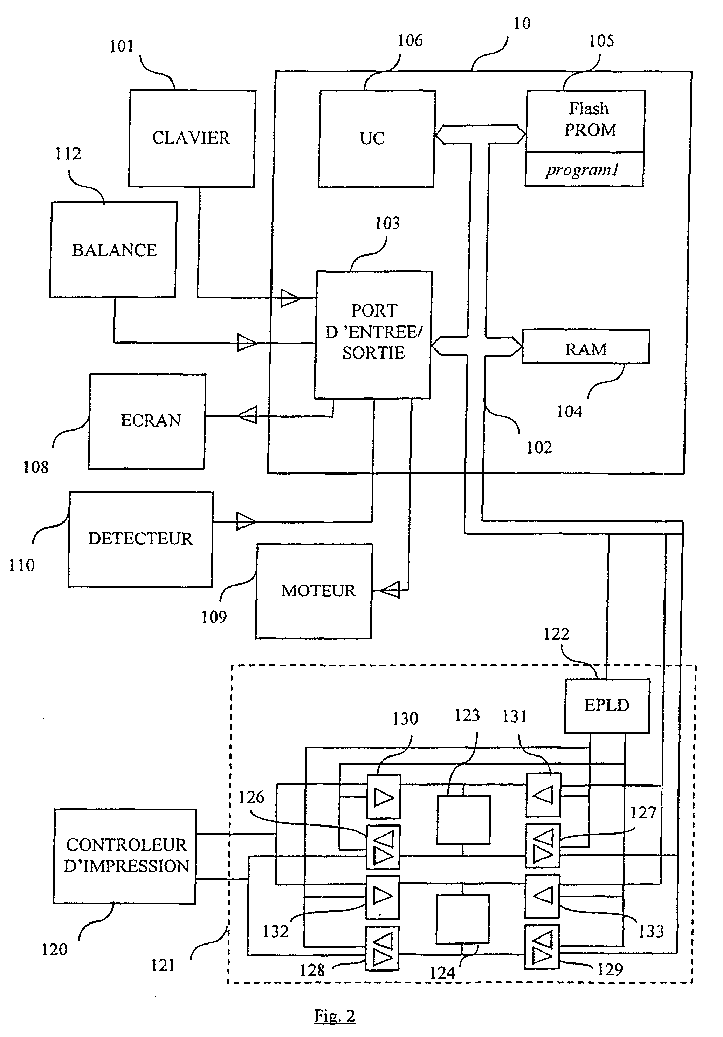

En figure 2, est représenté un circuit électronique de commande du dispositif tel que présenté en figure 1. Ce circuit est illustré sous forme de schéma synoptique et représenté sous référence générale 100. Il comporte, reliés entre eux par un bus d'adresses et de données 102 :
- une unité centrale de traitement (microprocesseur) 106 ;
- une mémoire vive RAM 104 ;
- une mémoire morte flash PROM 105 ;
- un port d'entrée sortie 103 servant à recevoir :
   - le poids de l'objet postal à affranchir, et
   - la détection de l'objet postal par chacun des détecteurs (non représentés aux figures) et à transmettre :
      - des signaux de commande de moteurs, et et, indépendamment du bus 102 :
         - des moteurs pas-à-pas 109 ;
         - des détecteurs de présence 110 ;
         - un écran de visualisation 108 relié au port d'entrée/sortie 103 ;
         - une balance 112 reliée au port d'entrée/sortie 103 et fournissant des octets représentatifs du poids d'un objet postal ; et
         - un clavier 101 relié au port d'entrée/sortie 103 et fournissant des octets représentatifs des touches de clavier successivement utilisées.

Chacun des éléments illustrés en figure 2 est bien connu de l'homme du métier des circuits à microprocesseur et, plus généralement, des systèmes de traitement de l'information. Ces éléments ne sont donc pas décrits ici.

La mémoire vive 104 conserve des données, des variables et des résultats intermédiaires de traitement, dans des registres de mémoire portant, dans la suite de la description, les mêmes noms que les données dont ils conservent les valeurs. La mémoire vive 104 comporte notamment des registres conservant des informations représentatives du poids de l'objet postal à affranchir, le format de l'objet postal en cours de traitement, le nombre d'objets postaux dans le lot en cours de traitement, des valeurs de compteurs ascendant et descendant qui correspondent à des montants d'affranchissement déjà déposés et restant à déposer avant le rechargement de la machine. Ces derniers registres fonctionnent selon des techniques connues dans le domaine des machines à affranchir (au cours de chaque affranchissement, lorsque le montant du compteur descendant est supérieur au montant de la marque d'affranchissement à déposer, il est décrémenté du montant de cette marque et le compteur ascendant est incrémenté du même montant).

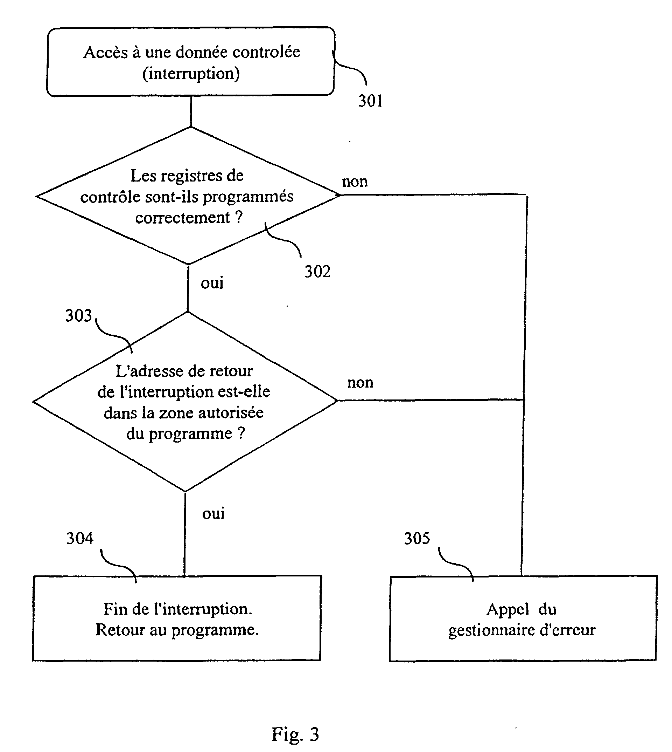

La mémoire morte 105 est adaptée à conserver le programme de fonctionnement de l'unité centrale de traitement 106, dans un registre *"program1"*, et les données nécessaires au fonctionnement de ce programme. En particulier, sont conservés dans la mémoire morte 105 :
- des valeurs correspondant aux registres de contrôle (voir test 302, en figure 3), et
- des adresses correspondant à un retour d'interruption dans une zone autorisée du programme, (voir test 303, figure 3).

En fait, la mémoire dite "morte" 105 est une mémoire réinscriptible qui ne s'efface pas lorsque le dispositif est éteint. Elle n'est réinscriptible que selon des procédures sécurisées et seulement par certaines personnes habilitées, si bien que, pour l'utilisateur quotidien, elle apparaît comme une mémoire morte.

L'unité centrale de traitement 106 est adaptée à mettre en oeuvre le programme conservé en mémoire morte 105 et à organiser la mémoire vive 104, conformément à la figure 3.

Le programme ou logiciel de la machine à affranchir est un logiciel multitâche, ce qui implique une allocation, par le processeur, d'un espace mémoire, ou pile, associé à chaque tâche. Cet espace mémoire est contenu dans la mémoire vive 104.

Dans le mode de réalisation décrit et représenté, l'unité centrale 106 est un processeur du type INTEL (marque déposée) de la génération ou plus jeune que la génération 80386 (marque déposée). Un registre pour la mise au point permet de protéger un mot de 32 données binaires, ou bits. En utilisant plusieurs registres identiques, il est possible de protéger des zones de mémoire plus importantes.

Conformément à la présente invention, on effectue une opération d'affectation de point d'arrêt à des données à protéger.

On observe ici que les points d'arrêt matériels et le type d'accès interdit sont programmés à l'aide de registres. Ceux-ci sont vérifiés régulièrement de manière à garantir que la donnée protégée l'est toujours. Le registre de commande des registres pour la mise au point permet de spécifier le type d'accès à contrôler (lecture, écriture, exécution).

Ainsi, lors d'un accès à une donnée protégée, l'accès est détecté par le microprocesseur et une interruption est effectuée.

Au cours de l'interruption qui est lancée lorsqu'un accès à la donnée protégée est détecté, on vérifie la bonne programmation des registres de contrôle, en les comparant aux valeurs de référence conservées en mémoire morte 105, et si l'accès à la donnée est licite.

On effectue ainsi, à chaque arrêt déclenché par un point d'arrêt matériel affecté à une donnée protégée, une opération de vérification de validité de l'accès.

Lors de l'appel de l'interruption, l'adresse courante du pointeur d'instruction est sauvegardée. Selon un mode de réalisation de la présente invention, cette adresse courant du pointeur d'instruction est comparée avec les adresses mémoire des fonctions autorisées à accéder aux données protégée.

Si l'accès est autorisé, l'opération d'accès se poursuit. Sinon, si l'accès est interdit ou si le contenu des registres de programmation a été modifié, le gestionnaire d'erreur est immédiatement appelé pour signaler que l'accès était interdit et que le contenu de cette donnée n'est plus valide (dans le cas d'une écriture). En effet, dans le mode de réalisation décrit et représenté, et dans le cas de la protection en écriture, celle-ci est effectuée avant la génération de l'interruption.

Dans le cas de la protection de compteurs, le procédé de l'invention permet d'indiquer que la valeur d'un compteur a été altérée et, dans le cas d'une double sauvegarde, il est possible de stopper l'application et d'indiquer quel compteur est valide.

Dans le cas de la protection d'une clé d'encryptage ou d'authentification, la mise en oeuvre de l'invention permet de détecter toute lecture illicite et d'assurer la validité de la clé et de valider le changement de clé.

En figure 3, on observe que, lors d'un accès à une donnée contrôlée est détecté, opération 301, une interruption est déclenchée.

Au cours de cette interruption, au cours d'un test 302, l'unité centrale 106 détermine si les registres de contrôle sont programmés correctement, ou non, par comparaison des valeurs contenues dans ces registres avec des valeurs conservées en mémoire morte 105.

Lorsque le résultat du test 302 est positif, au cours d'un test 303, l'unité centrale 106 détermine si l'adresse de retour de l'interruption est dans la zone autorisée du programme, ou non, en comparant cette adresse avec des adresses conservées en mémoire morte 105.

Lorsque le résultat de l'un des test 302 ou 303 est négatif, au cours d'une opération 305, l'unité centrale 106 procède à un appel du gestionnaire d'erreur en déroutant l'exécution du logiciel vers la zone correspondant au gestionnaire d'erreur en mémoire morte 105.

Lorsque le résultat du test 303 est positif, l'interruption en cours est achevée et l'unité centrale 106 effectue un retour au programme qui était en cours d'exécution lors de l'accès à une donnée contrôlée détectée au cours de l'opération 301.

## Revendications

1. Procédé de protection de données dans un système comportant un microprocesseur (106) possédant au moins un point d'arrêt matériel (301) ledit microprocesseur exécutant une opération d'affectation de point d'arrêt à des données à protéger, laquelle provoque dans ledit microprocesseur (106) la génération d'un arrêt ou interruption (301) à chaque fois qu'une desdites données à protéger est accédée **caracterisé en ce qu'**il comporte, à chaque arrêt (301) déclenché par un point d'arrêt matériel affecté à une donnée protégée, une opération de vérification de ce que l'adresse de retour de l'interruption est dans la zone autorisée du programme (303).

2. Procédé de protection selon la revendication 1, qui comporte, à chaque arrêt (301) déclenché par un point d'arrêt matériel affecté à une donnée protégée, une opération de vérification de validité de l'accès (302, 303).

3. Procédé de protection selon la revendication 1 ou 2, qui comporte, à chaque arrêt (301) déclenché par un point d'arrêt matériel affecté à une donnée protégée, une opération de vérification de la programmation des registres de contrôle (302).

4. Procédé de protection selon la revendication 1, 2 ou 3, qui comporte une opération d'appel de gestionnaire d'erreur (305) lorsqu'au moins une opération de vérification (302, 303) donne un résultat négatif.

5. Dispositif de protection de données dans un système comportant un microprocesseur (106) possédant au moins un point d'arrêt matériel, le dispositif comportant un moyen d'affectation (106) de point d'arrêt ou interruption à des données à protéger et **caracterisé en ce qu'**il comporte un moyen de vérification (106) de ce que l'adresse de retour de l'interruption est dans la zone autorisée du programme.

6. Dispositif de protection selon la revendication 5, qui comporte un moyen de vérification (106) de validité de chaque accès correspondant à un arrêt ou interruption déclenché par un point d'arrêt matériel affecté à une donnée protégée.

7. Dispositif de protection selon la revendication 5 ou 6, qui comporte un moyen de vérification (106) de la programmation des registres de contrôle.

8. Dispositif de protection selon la revendication 5, 6 ou 7, qui comporte un moyen d'appel (106) de gestionnaire d'erreur lorsqu'au moins un moyen de vérification fournit un résultat de vérification négatif.

9. Machine à affranchir, qui comporte un dispositif de protection de données selon l'une quelconque des revendications 5 à 8.

## Patentansprüche

1. Verfahren zum Schutz von Daten in einem System, welches einen Mikroprozessor (106) aufweist, der mindestens eine Hardware-Fehlersuche (301) beherrscht, wobei der Mikroprozessor eine Fehlersuchoperation hinsichtlich der zu schützenden Daten ausführt, durch welche im Mikroprozessor (106) jedesmal eine Pause oder eine Unterbrechung bewirkt wird, wenn auf eine der zu schützenden Daten zugegriffen wird, **dadurch gekennzeichnet, dass** es bei jeder Pause (301), die durch eine Fehlersuche hinsichtlich einer zu schützenden Date ausgelöst wird, eine Operation zur Überprüfung, ob sich die Adresse zum Zurücksetzen der Unterbrechung in der zulässigen Programmzone (303) befindet, mitumfaßt.

2. Schutzverfahren nach Anspruch 1, das bei jeder Pause (301), die durch eine Fehlersuche hinsichtlich einer zu schützenden Date ausgelöst wird, eine Überprüfüngsoperation der Zugangsberechtigung (302, 303) mitumfaßt.

3. Schutzverfahren nach Anspruch 1 oder 2, das bei jeder Pause (301), die durch eine Fehlersuche hinsichtlich einer zu schützenden Date ausgelöst wird, eine Überprüfungsoperation der Programmierung der Kontrollregister (302) miturnfaßt.

4. Schutzverfahren nach Anspruch 1, 2 oder 3, das einen Abruf einer Fehlerverwaltung (305) mitumfaßt, wenn mindestens eine Überprüfungsoperation ein negatives Resultat ausgibt.

5. Vorrichtung zum Schutz von Daten in einem System, welches einen Mikroprozessor (106) aufweist, der mindestens eine Hardware-Fehlersuche beherrscht, wobei die Vorrichtung ein Mittel (106) zum Zuweisen einer Pause oder einer Unterbrechung hinsichtlich zu schützender Daten hat, **dadurch gekennzeichnet, dass** sie ein Mittel (106) zum Überprüfen, ob sich die Adresse zum Zurücksetzen der Unterbrechung in der zulässigen Programmzone (303) befindet, mitumfaßt.

6. Schutzvorrichtung nach Anspruch 5, die ein Mittel (106) zur Berechtigungsüberprüfung für jeden Zugang bei einem durch eine von einer zu schützenden Date verursachten Fehlersuche ausgelösten Anhalten oder Unterbrechen aufweist.

7. Schutzvorrichtung nach Anspruch 5 oder 6, die ein Mittel (106) zur Überprüfung der Programmierung der Kontrollregister mitumfaßt.

8. Schutzvorrichtung nach Anspruch 5, 6 oder 7, die ein Mittel (106) zum Abrufen einer Fehlerverwaltung (305) mitumfaßt, wenn mindestens ein Überprüfungsmittel ein negatives Überprüfungsresultat ausgibt.

9. Frankiermaschine mit einer Vorrichtung nach einem der Ansprüche 5 bis 8 zum Schutz von Daten.

## Claims

1. A method of protecting data in a system including a microprocessor (106) having at least one hardware break point (301), said microprocessor executing an operation of allocating a break point to data items to be protected, which instigates in said microprocessor (106) the generation of a break or interrupt (301) each time one of said data items to be protected is accessed, **characterized in that** it includes, at each break (301) triggered by a hardware break point allocated to a protected data item, an operation of verifying that the interrupt return address is in the authorized area of the program.

2. A protection method according to claim 1, which includes an access validity verification operation (302, 303) at each break (301) triggered by a hardware break point allocated to a protected data item.

3. A protection method according to claim 1 or 2, which includes an operation (302) of verifying the programming of the control registers at each break (301) triggered by a hardware break point allocated to a protected data item.

4. A protection method according to claim 1, 2 or 3, which includes an operation (305) of invoking an error manager if at least one verification operation (302, 303) gives a negative result.

5. A device for protecting data in a system including a microprocessor (106) having at least one hardware break point, the device including means (106) for allocating a break point or interrupt to data to be protected and **characterized in that** it includes means (106) for verifying that the interrupt return address is in the authorized area of the program.

6. A protection device according to claim 5, which includes means (106) for verifying the validity of each access corresponding to a break or interrupt triggered by a hardware break point allocated to a protected data item.

7. A protection device according to claim 5 or 6, which includes means (106) for verifying the programming of the control registers.

8. A protection device according to claim 5, 6 or 7, which includes means (106) for invoking an error manager if at least one verification means supplies a negative verification result.

9. A franking machine which includes a data protection device according to any one of claims 5 to 8.
